# EUROPEAN PATENT APPLICATION

(11) **EP 3 032 669 A1**
(43) Date of publication of application: **15.06.2016**
(21) Application number: 14835336.0
(22) Date of filing: 18.07.2014
(51) Int. Cl.: H02G 11/00, B60R 16/02, H01B 7/06

(54) **CABLE-HOLDING BRACKET**

(30) Priority: 07.08.2013 JP 2013163990
(71) Applicant: Sumitomo Wiring Systems, Ltd., Yokkaichi-shi, Mie 510-8503 (JP)
(72) Inventor: IWATA, Makoto, Yokkaichi-shi Mie 510-8503 (JP)
(74) Representative: Müller-Boré & Partner Patentanwälte PartG mbB
(86) International application number: PCT/JP2014/069179
(87) International publication number: WO 2015/019829

(57) **Abstract**

It is aimed to provide a wire holding bracket with a novel structure capable of space-efficiently and safely routing a wire for power supply on a movable body slidably mounted relative to a supporting body. The wire holding bracket includes a mounting portion 58 to be mounted on a slide bracket 22, a wire main body holding portion 48 projecting from the mounting portion 58 toward one side in a transverse direction of a guide rail 20, a wire end holding portion 66 projecting from the mounting portion 58 toward the other side in the transverse direction of the guide rail 20 and extending toward a power supply unit 68 of a movable body 14 and a wire accommodating recess 70 extending from the wire main body holding portion 48 to the wire end holding portion 66 through the mounting portion 58. The mounting portion 58 is slidably held relative to the guide rail 20 together with the slide bracket 22 by being mounted on the slide bracket 22.

## Description

### Technical Field

The present invention relates to a wire holding bracket used to route a wire for power supply arranged between a supporting body and a movable body displaceably mounted relative to the supporting body.

### Background Art

Conventionally, an automotive vehicle includes many movable bodies such as a back door and a rear window displaceably mounted relative to a supporting body such as a vehicle body and free to open and close. In the case of mounting an electrical device such as a hot wire in the movable body, power is supplied to the electrical device by routing a wire for power supply between the supporting body and the movable body.

Such a wire routed between the supporting body and the movable body needs to be routed, taking into account a movable range of the movable body. For example, an example of wire routing for installing a spool obtained by reeling a strip-like flexible cable for power supply on a fixed window as a supporting body and connecting an end of the flexible cable drawn out from the spool to a hot wire laid in a movable window as a movable body in a rear window system of an automotive vehicle which is laterally slid to be opened and closed is disclosed in the specification of US patent publication No. 2013/0047513 (patent literature 1) (see FIGS. 14 to 17, etc. of patent literature 1).

However, in the wire routing disclosed in patent literature 1, it is necessary to install the large-size spool and a longitudinal accommodation rail for guiding the flexible cable to avoid interference with other members on the fixed window, thereby presenting a problem that the enlargement of an installation space for the wire and the like is unavoidable.

Further, a rear window system of an automotive vehicle which is vertically slid to be opened and closed is disclosed in Japanese Unexamined Patent Publication No. 2007-253866 (patent literature 2), but a complicated driving mechanism is arranged between a movable body and a supporting body. Specifically, to realize a smooth sliding movement of the movable body relative to the supporting body, a movement of the movable body relative to the supporting body is guided by mounting a guide rail extending in a sliding direction of the movable body on the supporting body and slidably engaging a slide bracket coupled to the movable body with this guide rail. Since it is important to route a wire for power supply without interference with other members in such a part, good countermeasures have been desired.

### Citation List

### Patent Literature

Patent literature 1:
   Specification of US Patent Publication No. 2013/0047513
Patent literature 2:
   Japanese Unexamined Patent Publication No. 2007-253866

### Summary of the Invention

### Technical Problem

The present invention was developed against the above situation and aims to provide a wire holding bracket with a novel structure capable of space-efficiently and safely routing a wire for power supply on a movable body slidably mounted relative to a supporting body.

### Solution to Problem

A first aspect of the present invention is directed to a wire holding bracket used to route a wire for power supply toward a movable body slidably mounted relative to a supporting body in an extending direction of a guide rail fixed to the supporting body by slidably engaging a slide bracket coupled to the movable body with the guide rail, the wire holding bracket including a mounting portion to be mounted on the slide bracket, a wire main body holding portion projecting from the mounting portion toward one side in a transverse direction of the guide rail, a wire end holding portion projecting from the mounting portion toward the other side in the transverse direction of the guide rail and extending toward a power supply unit of the movable body, and a wire accommodating recess extending from the wire main body holding portion to the wire end holding portion through the mounting portion, the mounting portion being slidably held relative to the guide rail together with the slide bracket by being mounted on the slide bracket.

According to this aspect, the mounting portion to be mounted on the slide bracket is provided, the wire main body holding portion is caused to project toward the one side in the transverse direction of the guide rail and the wire end holding portion extending toward the power supply unit of the movable body is caused to project toward the other side in the transverse direction of the guide rail. This enables the wire for power supply to be routed and held from one side toward the other side across the guide rail in the transverse direction. Thus, the wire for power supply to an electrical device provided in the movable body can be space-efficiently secured, skillfully using a space originally provided around the guide rail for a smooth movement of the movable body. In addition, it is possible to provide the wire holding bracket capable of following a sliding movement of the movable body by a simple structure of only mounting the mounting portion on the slide bracket.

In addition, the wire accommodating recess is provided which extends from the wire main body holding portion of the wire holding bracket to the wire end holding portion through the mounting portion. This enables the wire for power supply to be safely routed in a movable area by preventing the interference of the guide rail, surrounding other members such as a driving mechanism and the wire. Thus, the wire for power supply can be safely routed by space-efficiently preventing interference with other members by using the wire holding bracket of this aspect even if the movable area where the wire holding bracket is slidable relative to the guide rail together with the slide bracket is a narrow area between the supporting body and the movable body.

According to a second aspect of the present invention, in the wire holding bracket according to the first aspect, a wire holding rib for holding the wire by the engagement of an engaging protrusion provided on a tip part with the wire is provided to project at each of a plurality of positions separated from each other in an extending direction of the wire accommodating recess in the wire accommodating recess.

According to this aspect, the wire accommodated and held on the wire holding bracket that slidingly moves relative to the guide rail can be reliably held by a simple structure of providing the projecting wire holding ribs in the wire accommodating recess. Further, by arranging the plurality of wire holding ribs in a manner separated from each other, the wire holding ribs can be easily deflected and a fitting operation can be easily performed in fitting the wire into the wire holding ribs.

According to a third aspect of the present invention, in the wire holding bracket according to the second aspect, the wire holding rib includes a flat plate portion projecting from a bottom surface of the wire accommodating recess toward an upper opening and extending along the extending direction of the wire accommodating recess and the engaging protrusion projecting from a tip part of the flat plate portion toward one widthwise side.

According to this aspect, the wire accommodated and held on the wire holding bracket that slidingly moves relative to the guide rail can be reliably held by a simple structure of providing the projecting wire holding ribs having an inversed L-shaped cross-sectional shape as a whole in the wire accommodating recess.

According to a fourth aspect of the present invention, in the wire holding bracket according to the second aspect, the wire holding rib includes a flat plate portion projecting from a bottom surface of the wire accommodating recess toward an upper opening and extending along the extending direction of the wire accommodating recess and the engaging protrusion projecting from a tip part of the flat plate portion toward both widthwise sides.

According to this aspect, the wire accommodated and held on the wire holding bracket that slidingly moves relative to the guide rail can be reliably held by a simple structure of providing the projecting wire holding ribs having a T-shaped cross-sectional shape as a whole in the wire accommodating recess. In addition, since the engaging protrusion is provided at opposite sides of the tip part of the flat plate portion, wires can be more stably supported along the opposite side surfaces of the flat plate portion.

According to a fifth aspect of the present invention, in the wire holding bracket according to any one of the first to fourth aspects, the slide bracket includes an extending plate portion arranged to face one side surface of the guide rail, whereas the mounting portion includes a flat main body portion to be placed on an outer surface of the extending plate portion and an engaging claw portion projecting from a peripheral edge part of the flat main body portion toward the extending plate portion and configured to press the flat main body portion into contact with the outer surface by being engaged with the extending plate portion.

According to this aspect, the mounting portion is composed of the flat main body portion and the engaging claw portion projecting on the peripheral edge part of the flat main body portion. Thus, the wire holding bracket can be stably mounted on the slide bracket only by a simple operation of placing the flat main body portion on the extending plate portion of the slide bracket arranged to face the one side surface of the guide rail and engaging the engaging claw portion with the extending plate portion. In addition, since the mounting portion can be configured into a flat shape composed of the flat main body portion and the engaging claw portion, the mounting portion can be advantageously mounted with a stable holding force of the mounting portion on the slide bracket ensured even in a narrow area between the supporting body and the movable body.

According to a sixth aspect of the present invention, in the wire holding bracket according to any one of the first to fifth aspects, the wire for power supply is formed of a curl cord including a spiral portion routed expandably and contractibly in the extending direction of the guide rail, and the wire main body holding portion is provided on the tip of an extending portion extending from the mounting portion in an expanding direction of the spiral portion of the curl cord.

According to this aspect, since the wire for power supply is formed of the curl cord including the spiral portion routed expandably and contractibly in the extending direction of the guide rail, a separate device such as a spool is not necessary unlike in a conventional structure and the wire for power supply having a length capable of covering a movable range of the movable body can be routed in a space-saving manner. Further, the wire main body holding portion of the wire holding bracket is provided on the tip of the extending portion extending in the expanding direction of the spiral portion of the curl cord. Thus, a length of the curl cord routed along the extending direction of the guide rail can be advantageously ensured by holding the end part of the spiral portion of the curl cord in the expanding direction on the wire main body holding portion. Note that an extending length of the extending portion can be easily adjusted to various movable bodies having different movement amounts by being appropriately changed in accordance with a length of the spiral portion of the curl cord that changes depending on the movement amount of the movable body.

According to a seventh aspect of the present invention, in the wire holding bracket according to the sixth aspect, an end part of the spiral portion of the curl cord is fixed to the wire main body holding portion, whereas an inner wire obtained by removing a coating of the curl cord is accommodated and arranged in the wire accommodating recess.

According to this aspect, since the wire routed from the one side toward the other side in the transverse direction of the guide rail is routed as the inner wire obtained by removing the coating of the curl cord, the wire for power supply can be advantageously routed even if an area around the guide rail is narrow.

According to an eighth aspect of the present invention, in the wire holding bracket according to any one of the first to seventh aspects, the wire accommodating recess includes a bent portion in which an extending direction changes, and a cover configured to cover an upper opening of the wire accommodating recess is mounted near the bent portion.

According to this aspect, if the wire accommodating recess includes the bent portion in which the extending direction changes, there is a high possibility that the wire for power supply bent in the bent portion is easily detached and interferes with other members. Thus, by mounting the cover configured to cover the upper opening of the wire accommodating recess near such a bent portion, it can be reliably prevented that the wire protrudes and interferes with other members.

### Effects of the Invention

The wire holding bracket of the present invention includes the wire main body holding portion and the wire end holding portion respectively projecting from the mounting portion to be mounted on the slide bracket toward the one and the other sides in the transverse direction of the guide rail. This enables the wire for power supply to be routed from the one side toward the other side across the guide rail in the transverse direction. Thus, the wire for power supply can be space-efficiently secured, skillfully using the space originally provided around the guide rail. In addition, by providing the wire accommodating recess, the wire for power supply can be safely routed in the movable area by preventing the interference of the guide rail, surrounding other members such as the driving mechanism and the wire. Therefore, the wire for power supply can be safely routed by space-efficiently preventing interference with other members even in a narrow clearance between the supporting body and the movable body.

### Brief Description of the Drawings

FIG. 1 is a rear view showing a rear window in which a curl cord is routed using a wire holding bracket as one embodiment of the present invention (solid line: when the rear window is closed, chain double-dashed line: when the rear window is open),
FIG. 2 is a view of an essential part including the wire holding bracket shown in FIG. 1 when viewed in a direction of an arrow A (when the rear window is closed),
FIG. 3 is a view of the essential part including the wire holding bracket shown in FIG. 1 when viewed in the direction of the arrow A (when the rear window is open),
FIG. 4 is an enlarged view of an essential part including the wire holding bracket shown in FIG. 2,
FIG. 5 is an enlarged section along V-V of FIG. 4,
FIG. 6 is a perspective view of the wire holding bracket shown in FIG. 4, and
FIG. 7 is an enlarged section along VII-VII of FIG. 6.

### Embodiment of the Invention

Hereinafter, an embodiment of the present invention is described with reference to the drawings.

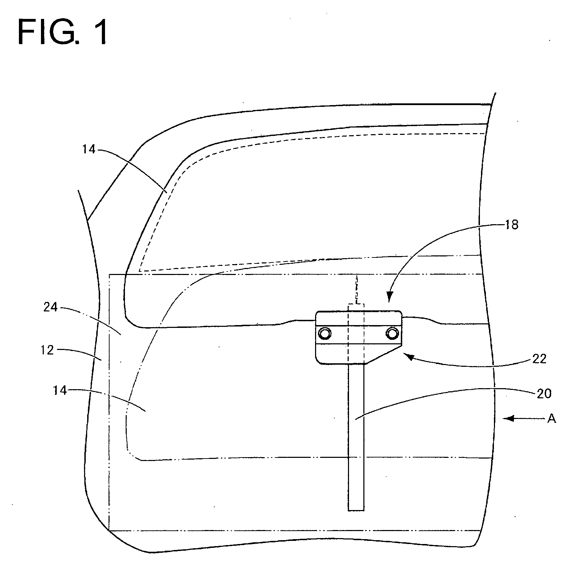

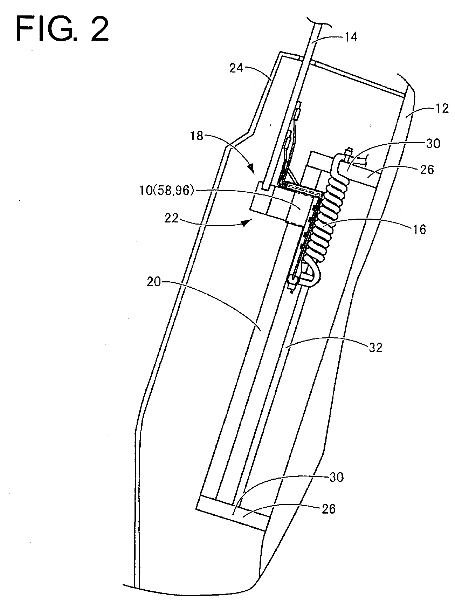

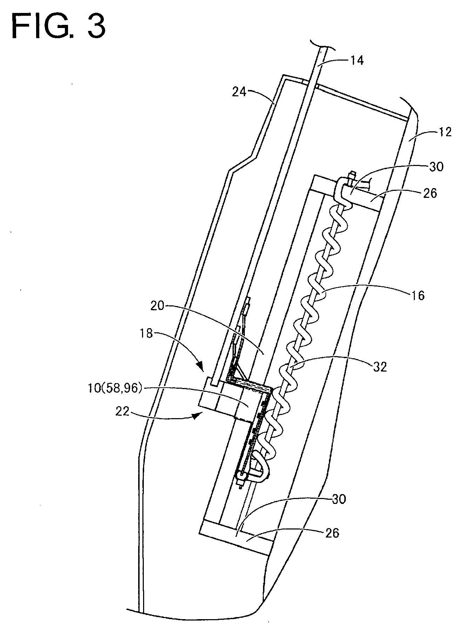

FIGS. 1 to 7 show a state where a curl cord 16 as a wire for power supply is routed between a vehicle 12 as a supporting body and a rear window 14 as a movable body displaceably mounted relative to the vehicle 12 using a wire holding bracket 10 as one embodiment of the present invention. More specifically, as shown in FIG. 1, a sliding mechanism 18 entirely slidingly displaceable in a vertical direction of the vehicle 12 is mounted in the rear window 14. As shown in FIGS. 2 and 3, the sliding mechanism 18 includes a guide rail 20 extending in a sliding direction (vertical direction in FIGS. 2 and 3) of the rear window 14 and fixed to the vehicle 12, a slide bracket 22 slidably engaged with the guide rail 20 and the curl cord 16 arranged along the guide rail 20. Since the spirally wound curl cord 16 is free to expand and contract during a sliding movement from a state shown in FIG. 2 to a state shown in FIG. 3, a sliding displacement is possible. Note that an unillustrated hot wire for defogging is provided in the rear window 14 and power can be supplied to the hot wire by the curl cord 16 routed between the vehicle 12 and the rear window 14. Further, the rear window 14 is accommodated into a window accommodating portion 24 when the rear window 14 is open.

As shown in FIGS. 2 and 3, leg portions 26 are mounted on opposite longitudinal end parts of the guide rail 20. The leg portions 26 are substantially in the form of columns, end parts on one side (left side in FIGS. 2 and 3) are mounted on the opposite longitudinal end parts of the guide rail 20, whereas end parts on the other side (right side in FIGS. 2 and 3) are fixed to the vehicle 12 by arbitrary fixing means. Further, substantially central parts of the leg portions 26 serve as guide shaft holding brackets 30, and end parts of a guide shaft 32 extending in the sliding direction of the rear window 14 are fixed at the guide shaft holding brackets 30 of the leg portions 26 arranged on the opposite longitudinal end parts of the guide rail 20. In short, the end parts of the guide shaft 32 are fixedly held on the vehicle 12 via the guide shaft holding brackets 30. Note that the guide rail 20 and the leg portions 26 are made of a known synthetic resin material, metal material or the like.

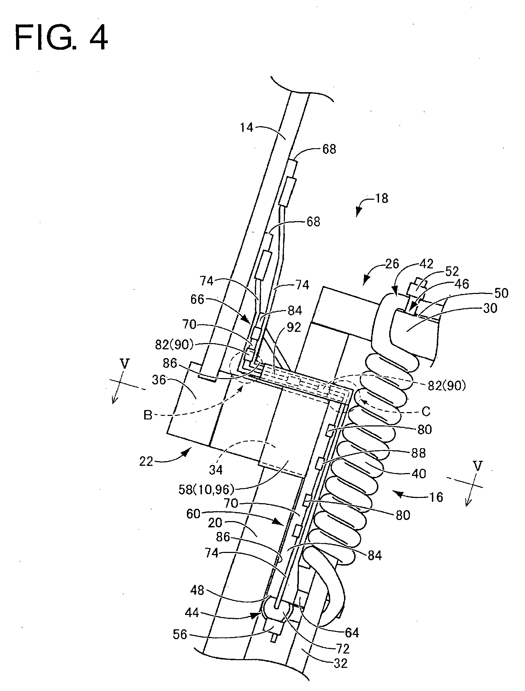

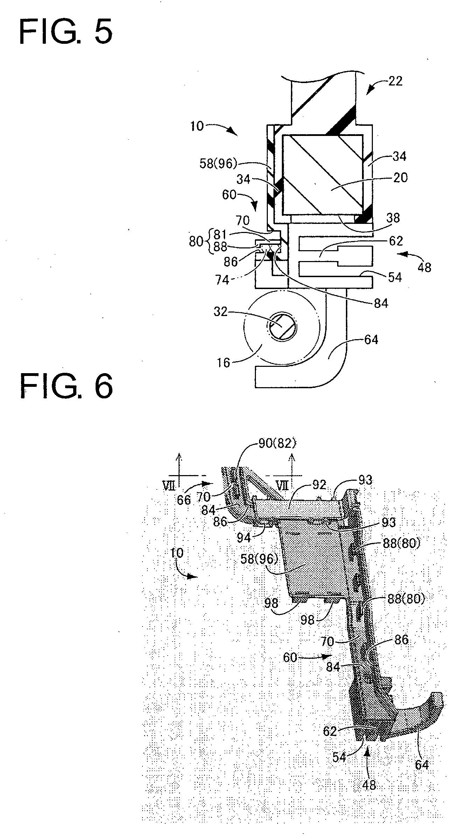

As shown in FIG. 4, the slide bracket 22 includes an extending plate portion 34 provided on a base end part and a glass holder 36 provided on a tip part and is made of a known synthetic resin material, metal material or the like. As shown in FIG. 5, the extending plate portion 34 is substantially U-shaped and arranged to sandwich the guide rail 20 by facing opposite side surfaces (in a lateral direction in FIG. 5) of the guide rail 20. In short, the base end part of the slide bracket 22 is formed into a substantially inverted U shape and arranged to straddle the guide rail 20 and extends also toward a bottom surface 38 of the guide rail 20, whereby the slide bracket 22 is stably slidably mounted relative to the guide rail 20. On the other hand, the glass holder 36 is formed into a substantially U shape and a lower end part of the rear window 14 is fitted and held in a U-shaped part. As the slide bracket 22 is slidingly displaced in an extending direction (vertical direction in FIG. 4) of the guide rail 20 by an unillustrated driving mechanism, the rear window 14 is slidingly displaceable in the vertical direction relative to the guide rail 20, i.e. the vehicle 12.

As shown in FIG. 4, the curl cord 16 includes a spiral portion 40 formed by being spirally wound and free to expand and contract, and the spiral portion 40 is routed in a state externally fitted on the guide shaft 32. Specifically, the spiral portion 40 is so routed as to be expandable and contractible in the extending direction (vertical direction in FIG. 4) of the guide rail 20. Further, fixing parts 42, 44 on opposite sides of the spiral portion 40 of the curl cord 16 in a longitudinal direction (vertical direction in FIG. 4) are fixed on wire main body holding portions 46, 48 respectively provided on the side of the vehicle 12 as a supporting body side and on the side of the rear window 14 as a movable body side. Specifically, on one longitudinal side (upper side in FIG. 4) of the spiral portion 40, the wire main body holding portion 46 is provided on an outer surface 50 of the guide shaft holding bracket 30. In addition, the outer surface 50 is provided with an unillustrated binding band insertion hole, and the fixing part 42 of the curl cord 16 can be stably fixed by being bound and fixed to the outer surface 50 of the guide shaft holding bracket 30 by a binding band 52. On the other hand, on the other longitudinal side (lower side in FIG. 4) of the spiral portion 40, the wire main body holding portion 48 is integrally provided to the wire holding bracket 10 as described later. As shown in FIGS. 4 to 6, the curl cord 16 is bound and fixed by winding a binding band 56 inserted into a band insertion hole 54 provided on the wire main body holding portion 48.

As shown in FIGS. 4 to 6, the wire holding bracket 10 is an integral assembly of a mounting portion 58 in the form of a flat plate pressingly mounted in contact with the extending plate portion 34 of the slide bracket 22 arranged to face one side surface of the guide rail 20, the wire main body holding portion 48 projecting from the mounting portion 58 toward one side (right side in FIG. 4) in a transverse direction of the guide rail 20 and a later-described wire end holding portion 66 projecting from the mounting portion 58 toward the other side (left side in FIG. 4) in the transverse direction of the guide rail 20. Note that, in this embodiment, an extending portion 60 extending from one end edge part (right side in FIG. 4) of the mounting portion 58 on the side of the curl cord 16 along an extending direction (downward direction in FIG. 4) of the spiral portion 40 of the curl cord 16 is integrally formed to couple the mounting portion 58 and the wire main body holding portion 48, and the wire main body holding portion 48 is provided on the tip of the extending portion 60.

As shown in FIG. 5, the wire main body holding portion 48 is formed into a substantially E shape open on the other side (right side in FIG. 5) in a direction perpendicular to an axial direction of the guide rail 20 and structured such that a tip part of an engaging projection 62 provided in the center is widened. In addition, a C-shaped guide portion 64 having a substantially C shape concentric with the guide shaft 32 is provided around the guide shaft 32 to project from the wire main body holding portion 48 to a side below the guide shaft 32 when viewed in an axial direction of the guide shaft 32.

On the other hand, the wire end holding portion 66 projecting from the mounting portion 58 toward the other side (left side in FIG. 4) in the transverse direction of the guide rail 20 is bent on a tip part and extends toward a power supply unit 68 of the rear window 14. A wire accommodating recess 70 extending from the wire main body holding portion 48 to the wire end holding portion 66 through the mounting portion 58 is formed on such a wire holding bracket 10 to be open toward one side (upper side in the plane of FIG. 4). Two inner wires 74, 74, which are wires exposed by removing a coating 72, of the curl cord 16 extending upward (upward in FIG. 4) from the wire main body holding portion 48 are accommodated and arranged in the wire accommodating recess 70.

As shown in FIGS. 4 to 6, the wire accommodating recess 70 is in the form of a gutter open on a side (left side in FIG. 5) opposite to the slide bracket 22, and wire holding ribs 80, 82 are respectively provided to project at a plurality of positions (eight positions in this embodiment) separated from each other in an extending direction of the wire accommodating recess 70. In a part of the wire accommodating recess 70 corresponding to the extending portion 60 extending from the mounting portion 58 to the wire main body holding portion 48, the wire holding rib 80 is formed into an inverted L-shaped cross-sectional shape as a whole by including a flat plate portion 81 projecting from a bottom surface 84 of the wire accommodating recess 70 toward an upper opening 86 and extending in the extending direction of the wire accommodating recess 70 and an engaging protrusion 88 provided to project from a tip part of the flat plate portion 81 toward one widthwise side (see FIG. 5). As shown in FIGS. 4 and 5, the engaging protrusion 88 holds the two inner wires 74 put together by being engaged with the inner wires 74. Since such wire holding ribs 80 having an inverted L-shaped cross-sectional shape are provided to project from a substantially widthwise central part of the bottom surface 84 of the wire accommodating recess 70, an operator can space-efficiently accommodate the inner wires 74 into the wire accommodating recess 70 with the detachment of the inner wires 74 obstructed by interference with the engaging protrusions 88 by a simple operation of accommodating the two inner wires 74 side by side between a side wall (lower side wall in FIG. 5) of the wire accommodating recess 70 toward which the engaging protrusions 88 project and the flat plate portions 81. Thus, operability can be improved. Further, an empty space can be provided between a side wall (upper side wall in FIG. 5) of the wire accommodating recess 70 on a side opposite to the side toward which the engaging protrusions 88 project and the flat plate portions 81 and used as an area where interference with neighboring members is prevented or the like. In addition, even if the operator erroneously routes the two inner wires 74 between the side wall (upper side wall in FIG. 5) of the wire accommodating recess 70 on the side opposite to the side toward which the engaging protrusions 88 project and the flat plate portions 81 or routes one inner wire 74 on each of opposite sides of the flat plate portions 81, at least either one of the inner wires 74 comes out without being engaged with the engaging protrusions 88. Thus, the operator can quickly notice an error in routing.

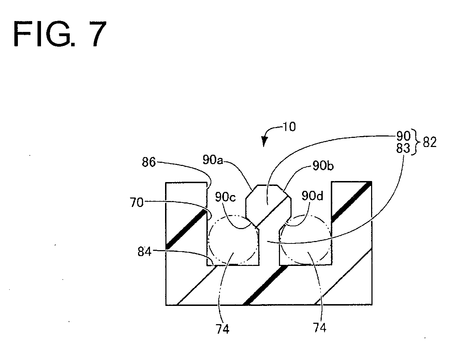

On the other hand, as shown in FIGS. 6 and 7, the wire holding rib 82 is formed to have a substantially T-shaped cross-sectional shape as a whole by including a flat plate portion 83 projecting from the bottom surface 84 of the wire accommodating recess 70 toward the upper opening 86 and extending in the extending direction of the wire accommodating recess 70 and an engaging protrusion 90 provided to project toward opposite widthwise sides from the flat plate portion 83. As shown in FIGS. 4 and 7, the inner wires 74 placed flat along opposite sides of the flat plate portions 83 are held by the engagement of the engaging protrusions 90 therewith. In this way, the operator can easily and reliably accommodate the inner wires 74 into the wire accommodating recess 70 with the detachment of the inner wires 74 obstructed by interference with the engaging protrusions 90 by a simple operation of accommodating the respective inner wires 74 between the opposite side surfaces of the flat plate portion 83 and the facing side walls of the wire accommodating recess 70. Thus, operability can be improved. In addition, even if the operator erroneously routes the two inner wires 74 between one side surface of the flat plate portion 83 and the facing side wall of the wire accommodating recess 70, one inner wire 74 comes out without being engaged with the engaging protrusions 90. Thus, the operator can quickly notice an error in routing. Note that, as shown in FIG. 7, the engaging protrusion 90 extends while having a substantially regular octagonal cross-section and a pair of upper inclined surfaces 90a, 90b facilitate the fitting of the inner wires 74, whereas a pair of lower inclined surfaces 90c, 90d exhibit holding forces for the inner wires 74.

As just described, by a simple structure of providing the projecting wire holding ribs 80 having an inverted L-shaped cross-sectional shape and wire holding ribs 82 having a T-shaped cross-sectional shape in the wire accommodating recess 70, the inner wires 74 accommodated and held on the wire holding bracket 10 that slidingly moves relative to the guide rail 20 can be reliably held. In addition, by arranging the plurality of wire holding ribs 80, 82 in a manner separated from each other, the wire holding ribs 80, 82 can be easily deflected and a fitting operation can be easily performed in fitting the inner wires 74 into the wire holding ribs 80, 82.

Further, as shown in FIG. 4, bent portions B, C where the extending direction of the wire accommodating recess 70 is changed substantially by 90° are provided at opposite sides of an area arranged across the guide rail 20 in the wire accommodating recess 70, and a cover 92 for covering the upper opening 86 of the wire accommodating recess 70 is mounted between the bent portions B and C. As shown in FIG. 6, the cover 92 is in the form of a flat plate and provided with engaging frame bodies 93 projecting toward the wire accommodating recess 70 from opposite widthwise end parts (opposite vertical sides in FIG. 6). On the other hand, engaging projections 94 projecting outwardly (both upwardly and downwardly in FIG. 6) are provided on side surfaces of the wire accommodating recess 70 facing the engaging frame bodies 93 and engaged with the engaging frame bodies 93 of the cover 92 to cover the upper opening 86 of the wire accommodating recess 70. Since the inner wires 74 for power supply are bent in the bent portions B, C of the wire accommodating recess 70, the inner wires 74 for power supply easily come out of the upper opening 86 of the wire accommodating recess 70 and, hence, may interfere with unillustrated other members. Thus, by mounting the cover 92 for covering the upper opening 86 of the wire accommodating recess 70 near the bent portions B, C, it can be reliably prevented that the wires protrude and interfere with other members. Note that, in the case of a member having a space therearound in the wire accommodating recess 70 such as the wire end holding portion 66, the detachment of the inner wires 74 for power supply from the wire end holding portion 66 can be advantageously prevented by winding a binding tape.

By placing a flat main body portion 96 of the mounting portion 58 on the outer surface of the extending plate portion 34 of the slide bracket 22 arranged on one side surface of the guide rail 20 using the thus structured wire holding bracket 10, four hook-like engaging claw portions 98 projecting toward the extending plate portion 34 from a peripheral edge part of the flat man body portion 96 are engaged with unillustrated engaging portions of the extending plate portion 34, whereby the flat main body portion 96 is pressed and held in contact with the outer surface of the extending plate portion 34. As a result, the mounting portion 58 is mounted on the slide bracket 22 and the wire holding bracket 10 is held slidably relative to the guide rail 20 together with the slide bracket 22.

Here, since the mounting portion 58 is composed of the flat main body portion 96 and the engaging claw portions 98 projecting on the peripheral edge part of the flat main body portion 96, the flat main body portion 96 can be stably mounted in a state placed on the extending plate portion 34 of the slide bracket 22 arranged on the one side surface of the guide rail 20. In addition, since the mounting portion 58 can be configured into a flat shape, the mounting portion 58 can be advantageously mounted even in a narrow space between the vehicle 12 and the slide bracket 22 with a stable holding force of the mounting portion 58 on the slide bracket 22 ensured. Further, since the inner wires 74 obtained by removing the coating 72 of the curl cord 16 are routed through a space around the slide bracket 22, which is a narrow space, the wire for power supply can be advantageously routed also in the space around the slide bracket 22.

Further, according to the wire holding bracket 10 of this embodiment, the wire main body holding portion 48 is caused to project toward one side in the transverse direction of the guide rail 20 and the wire end holding portion 66 extending toward the power supply unit 68 of the rear window 14 is caused to project toward the other side from the mounting portion 58 to be mounted on the slide bracket 22. This enables the inner wires 74 for power supply to be routed and held from one side toward the other side across the guide rail 20 in the transverse direction. Specifically, the inner wires 74 for power supply to the hot wire for defogging can be space-efficiently ensured, skillfully using the space originally provided around the guide rail 20. In addition, it is possible to provide the wire holding bracket 10 capable of following a sliding movement of the rear window 14 by a simple structure of only mounting the mounting portion 58 on the slide bracket 22.

Further, by providing the wire accommodating recess 70 from the wire main body holding portion 48 to the wire end holding portion 66 of the wire holding bracket 10, the inner wires 74 can be safely routed to the power supply unit 68 of the rear window 14 by preventing the interference of the guide rail 20, surrounding other members such as a driving mechanism and the inner wires 74. Specifically, even in narrow spaces around the guide rail 20 and the slide bracket 22 where a movable range of a movable component is narrow, interference with other members can be space-efficiently prevented and the wires for power supply can be safely routed by using the wire holding bracket 10 of this embodiment.

Furthermore, since the wires for power supply are formed of the curl cord 16, a separate device such as a spool is not required unlike in a conventional structure and the wires for power supply having a length capable of covering the movable range of the rear window 14 can be routed in a space-saving manner. Further, the wire main body holding portion 48 of the wire holding bracket 10 is provided on the tip of the extending portion 60 extending in the expanding direction of the spiral portion 40 of the curl cord 16. Thus, a length of the curl cord 16 routed along the extending direction of the guide rail 20 can be advantageously ensured by holding the end part of the spiral portion 40 of the curl cord 16 in the expanding direction on the wire main body holding portion 48.

Although the embodiment of the present invention has been described in detail above, the present invention is not limited to the specific description of the embodiment. For example, although the wire accommodating recess 70 is arranged to have a substantially crank shape as a whole in a plan view viewed in a direction perpendicular to the plane of FIG. 4, it can be arranged to have an arbitrary shape according to a power supply position to an electrical device provided in a movable body. Further, the numbers and shapes of the wire holding ribs 80, 82 provided in the wire accommodating recess 70 can be also arbitrarily set according to the inner wires 74 arranged along the wire accommodating recess 70.

### LIST OF REFERENCE SIGNS

10: wire holding bracket, 12: vehicle (supporting body), 14: rear window (movable body), 16: curl cord (wire for power supply), 20: guide rail, 22: slide bracket, 34: extending plate portion, 40: spiral portion, 48: wire main body holding portion, 58: mounting portion, 60: extending portion, 66: wire end holding portion, 68: power supply unit, 70: wire accommodating recess, 72: coating, 74: inner wire (wire), 80, 82: wire holding rib, 81, 83: flat plate portion, 84: bottom surface, 86: upper opening, 88: engaging protrusion, 90: engaging protrusion, 92: cover, 96: flat main body portion, 98: engaging claw portion

## Claims

1. A wire holding bracket used to route a wire for power supply toward a movable body slidably mounted relative to a supporting body in an extending direction of a guide rail fixed to the supporting body by slidably engaging a slide bracket coupled to the movable body with the guide rail, comprising:
a mounting portion to be mounted on the slide bracket;
a wire main body holding portion projecting from the mounting portion toward one side in a transverse direction of the guide rail;
a wire end holding portion projecting from the mounting portion toward the other side in the transverse direction of the guide rail and extending toward a power supply unit of the movable body; and
a wire accommodating recess extending from the wire main body holding portion to the wire end holding portion through the mounting portion,
the mounting portion being slidably held relative to the guide rail together with the slide bracket by being mounted on the slide bracket.

2. A wire holding bracket according to claim 1, wherein a wire holding rib for holding the wire by the engagement of an engaging protrusion provided on a tip part with the wire is provided to project at each of a plurality of positions separated from each other in an extending direction of the wire accommodating recess in the wire accommodating recess.

3. A wire holding bracket according to claim 2, wherein the wire holding rib includes a flat plate portion projecting from a bottom surface of the wire accommodating recess toward an upper opening and extending along the extending direction of the wire accommodating recess and the engaging protrusion projecting from a tip part of the flat plate portion toward one widthwise side.

4. A wire holding bracket according to claim 2, wherein the wire holding rib includes a flat plate portion projecting from a bottom surface of the wire accommodating recess toward an upper opening and extending along the extending direction of the wire accommodating recess and the engaging protrusion projecting from a tip part of the flat plate portion toward both widthwise sides.

5. A wire holding bracket according to any one of claims 1 to 4, wherein the slide bracket includes an extending plate portion arranged to face one side surface of the guide rail, whereas the mounting portion includes a flat main body portion to be placed on an outer surface of the extending plate portion and an engaging claw portion projecting from a peripheral edge part of the flat main body portion toward the extending plate portion and configured to press the flat main body portion into contact with the outer surface by being engaged with the extending plate portion.

6. A wire holding bracket according to any one of claims 1 to 5, wherein the wire for power supply is formed of a curl cord including a spiral portion routed expandably and contractibly in the extending direction of the guide rail, and the wire main body holding portion is provided on the tip of an extending portion extending from the mounting portion in an expanding direction of the spiral portion of the curl cord.

7. A wire holding bracket according to claim 6, wherein an end part of the spiral portion of the curl cord is fixed to the wire main body holding portion, whereas an inner wire obtained by removing a coating of the curl cord is accommodated and arranged in the wire accommodating recess.

8. A wire holding bracket according to any one of claims 1 to 7, wherein the wire accommodating recess includes a bent portion in which an extending direction changes, and a cover configured to cover an upper opening of the wire accommodating recess is mounted near the bent portion.
